# EUROPÄISCHE PATENTANMELDUNG

(11) **EP 1 243 482 A2**
(43) Veröffentlichungstag der Anmeldung: **25.09.2002**
(21) Anmeldenummer: 02006559.5
(22) Anmeldetag: 20.03.2002
(51) Int. Cl.: B60R 21/20, B62D 1/04, B60R 11/02, B60R 16/02, B60K 35/00

(54) **Fahrzeuglenkvorrichtung**

(30) Priorität: 22.03.2001 DE 20105002 U
(71) Anmelder: TRW Automotive Safety Systems GmbH & Co. KG, 63743 Aschaffenburg (DE)
(72) Erfinder: Derrick, John-Oliver, 97265 Hettstadt (DE)
(74) Vertreter: Kitzhofer, Thomas, Dipl.-Ing.

(57) **Zusammenfassung**

Eine Fahrzeuglenkvorrichtung, mit einem Lenkrad (10), das ein Gassackmodul (12) mit einem Gassack (18, 18') und einer frontseitigen Abdeckkappe (14) aufweist, die eine Austrittsöffnung (34) für den Gassack (18, 18') bis zu dessen Entfaltung verschließt, ist dadurch gekennzeichnet, daß in der Abdeckkappe (14) eine Anzeige- und/oder Bedienvorrichtung angeordnet ist und die Austrittsöffnung (34) um die Anzeige- und/oder Bedienvorrichtung (36) herum verläuft.

## Beschreibung

Die Erfindung betrifft eine Fahrzeuglenkvorrichtung, mit einem Lenkrad, das ein Gassackmodul mit einem Gassack und einer frontseitigen Abdeckkappe aufweist, die eine Austrittsöffnung für den Gassack bis zu dessen Entfaltung verschließt.

In Fahrzeugen ist die Unterbringung von Instrumenten wie beispielsweise Tachometer, Drehzahlmesser und dergleichen in der Instrumententafel sowie von Bedienelementen sehr aufwendig, und darüber hinaus sind diese Instrumente/Bedienelemente für eine Reparatur schlecht zugänglich. Die Instrumente liegen darüber hinaus hinter dem Lenkrad, so daß sie nur für Personen von bestimmter Größe in optimalem Blickwinkel liegen. Insbesondere kleine Personen können aufgrund des Lenkrades eine eingeschränkte Sicht auf die Instrumente haben.

Aufgabe der Erfindung ist es, die Bestückung des Fahrzeugs mit der Instrumentenanzeige und/oder Bedienelementen zu vereinfachen. Die Erfindung sieht hierzu eine Fahrzeuglenkvorrichtung der eingangs genannten Art vor, bei der in der Abdeckkappe eine Anzeige- und/oder Bedienvorrichtung angeordnet ist und die Austrittsöffnung für den Gassack um die Anzeige- und/oder Bedienvorrichtung herum verläuft. Das Fahrzeuglenkrad wird bislang nur mit Multifunktionsschaltern ausgestattet, die seitlich an die Abdeckkappe angrenzen. Es dient jedoch nicht zur Unterbringung einer Anzeige- und/oder Bedienvorrichtung. Dies ist deshalb nicht angedacht worden, weil das großbauende Gassackmodul fast die gesamte Abdeckkappe und damit den gesamten Nabenbereich des Lenkrades im Rückhaltefall aufreißt, so daß damit zwangsläufig kein Ort zur Unterbringung der Anzeige- und/oder Bedienvorrichtung vorhanden ist. Die Erfindung sieht hingegen vor, daß die Austrittsöffnung um die Anzeige- und/oder Bedienvorrichtung herum verläuft, so daß die Anzeige- und/oder Bedienvorrichtung selbst stationär am Lenker befestigt bleibt, selbst wenn die Abdeckkappe aufreißt. Für die Signalübertragung stehen Vorrichtungen zur Verfügung, die bereits im Zusammenhang mit den Multifunktionsschaltern und auch im Zusammenhang mit der Gasgeneratorauslösung entwickelt wurden. Die Montage des Lenkrades selbst ist sehr einfach, und es kann auch leicht demontiert werden, was ein erheblicher Vorteil gegenüber der Demontage von Anzeige- und/oder Bedienvorrichtungen in der Instrumententafel ist. Die Abdeckkappe kann eine zentrische Vertiefung oder Öffnung zur Unterbringung der Anzeige- und/oder Bedienvorrichtung haben.

Vorzugsweise hat die Austrittsöffnung eine geschlossene Ringform. Der Gassack tritt also in symmetrischer Form und zentrisch, d.h. im Bereich der Nabe, aus dem Gassackmodul heraus in Richtung Insassen.

Vorzugsweise ist auch der Gassack ringförmig ausgeführt und bewegt sich über die Austrittsöffnung nach außen. Der Gassack umgibt somit im entfalteten Zustand die Anzeige- und/oder Bedienvorrichtung, die beim Entfalten des Gassackes stationär am Lenkrad befestigt bleibt. Der Gassack kann an seiner Frontwand radial einwärts zusammenschlagen, so daß die Einbuchtung von außen nicht offen ist.

Gemäß einer Ausführungsform ist die Anzeigevorrichtung ein Bildschirm zur Anzeige verschiedener Fahrzeugdaten. Der Bildschirm wird also universell verwendet und dient beispielsweise der Geschwindigkeitsanzeige, der Anzeige eines Navigationssystems, der Radioanzeige, der Telefonanzeige, als WAP-Bildschirm, als PC-Display, als Bildschirm zur Versendung/Ansicht von E-Mails, als Touch-Screen zur kombinierten Anzeige und Bedienung einer Einrichtung oder als Touch Pad zur Bedienung von Fahrzeugelementen.

Eine bevorzugte Ausführungsform sieht vor, daß ein Lenkwinkel-Erfassungssensor vorgesehen ist, welcher über eine Steuerung mit dem Bildschirm gekoppelt ist. Die Steuerung ist so ausgebildet, daß sie den Bildschirm so steuert, daß dieser unabhängig vom Lenkwinkeleinschlag immer eine horizontal ausgerichtete Anzeige liefert, obwohl sich der Bildschirm beim Drehen des Lenkrads mitdreht, da er starr mit dem Lenkrad gekoppelt ist.

Weitere Merkmale und Vorteile der Erfindung ergeben sich aus der nachfolgenden Beschreibung und aus der nachfolgenden Zeichnung, auf die Bezug genommen wird.
- Figuren 1a und 1b zeigen jeweils eine Draufsicht auf eine erfindungsgemäße Lenkvorrichtung,
- Figur 2 zeigt eine Seitenansicht der in Figur 1 gezeigten Lenkvorrichtung mit entfaltetem Gassack,
- Figur 3 zeigt eine zweite Ausführungsform der erfindungsgemäßen Lenkvorrichtung, und
- Figuren 4 bis 6 zeigen Draufsichten auf andere Ausführungsformen der erfindungsgemäßen Lenkvorrichtung.

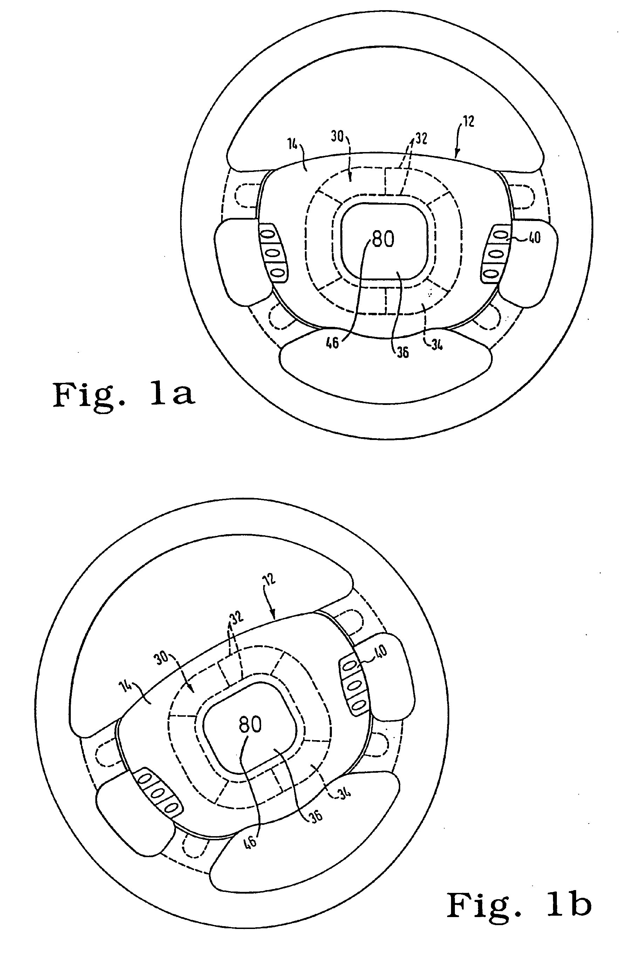

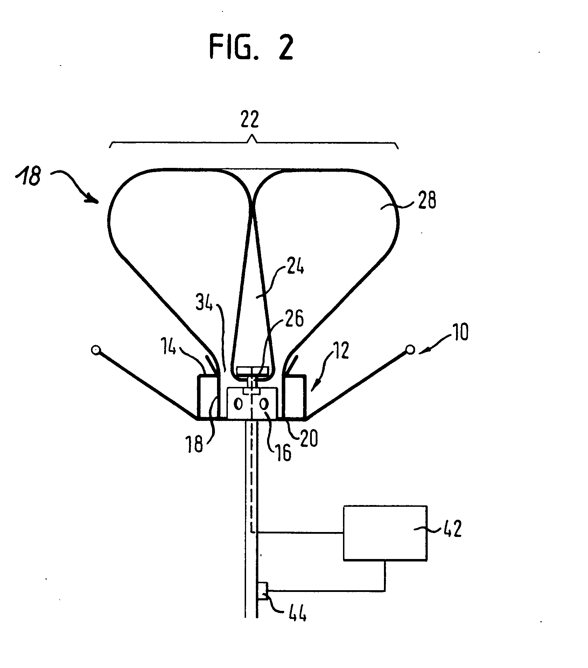

Die Figuren 1a und 1b zeigen eine Fahrzeuglenkvorrichtung mit einem Lenkrad 10, in dem ein Gassackmodul 12 im Bereich der Nabe untergebracht ist. Das Lenkrad 10 ist mit zwei voneinander verschiedenen Lenkradeinschlägen gezeigt. Das Gassackmodul hat eine frontseitige Abdeckkappe 14 im Bereich der Nabe, einen Gasgenerator 16 und einen Gassack 18. Der Gassack ist an seinem äußeren Rand 20 am Boden des Gassackmoduls 12 befestigt. Bezogen auf den entfalteten Zustand (siehe Figur 2) besitzt der Gassack eine Frontwand 22, auf die der Insasse auftrifft. Die Frontwand 22 geht in eine Einbuchtung 24 über, die dadurch gebildet ist, daß ein zentrischer Abschnitt der Gassackwand über eine Befestigungsvorrichtung 26 am Gasgenerator 16 befestigt bleibt und somit an einem Austritt aus dem Gassackmodul 12 gehindert ist. Der Gassack hat damit im aufgeblasenen Zustand eine ringförmige Gestalt mit einer ringförmigen Kammer 28.

Die Abdeckkappe 14 hat zahlreiche Klappen 30, die durch vorgegebene Filmscharniere oder Sollbruchlinien 32 definiert sind. Diese Klappen 30 schließen eine geschlossen ringförmige Austrittsöffnung 34 für den Gassack 18. Die Austrittsöffnung 34 umgibt eine zentrisch in der Abdeckkappe 14 vorgesehene Anzeigevorrichtung in Form eines LCD-Bildschirms 36, der, abhängig von der gewünschten Einstellung, wenigstens eine der folgenden Funktionen hat: Geschwindigkeitsanzeige, Anzeige eines Navigationssystems, Radioanzeige, Telefonanzeige, WAP-Bildschirm (Abrufen/Versenden von E-Mails), PC-Display und dergleichen. Auch die übrigen bislang bereits im Fahrzeug vorgesehenen Anzeigen können über den LCD-Bildschirm erfolgen. Vorzugsweise sind alle Bildschirme in den gezeigten Ausführungsformen LCD-Bildschirme.

Der Bildschirm 36 ist über die Befestigungseinrichtung 26 ebenfalls bleibend am Gassackmodul 12 befestigt, so daß er beim Entfalten des Gassacks 18 und Aufreißen der Abdeckkappe 14 stationär am Lenkrad 10 befestigt bleibt und.sich beim Drehen des Lenkrads mitdreht. Über Multifunktionsschalter 40 können darüber hinaus unterschiedliche Informationen abgefragt und am Bildschirm 36 angezeigt werden. Der Bildschirm 36 ist mit einer Steuerung 42 gekoppelt, die wiederum mit einem Sensor 44 zur Erfassung des Lenkwinkeleinschlags verbunden ist. In der Steuerung 42 gehen darüber hinaus auch noch die übrigen Daten ein, die am Bildschirm 36 angezeigt werden. Die Steuerung 42 steuert den Bildschirm 36 dergestalt, daß unabhängig vom Lenkwinkel der Bildschirm immer eine horizontal ausgebildete Anzeige 46 liefert (siehe Figur 1b). Wird das Lenkrad 10 gedreht, so wird die Anzeige 46 elektronisch um den gleichen Winkel in die Gegenrichtung "gedreht", so daß trotz Kurvenfahrt die Anzeige 46 horizontal steht.

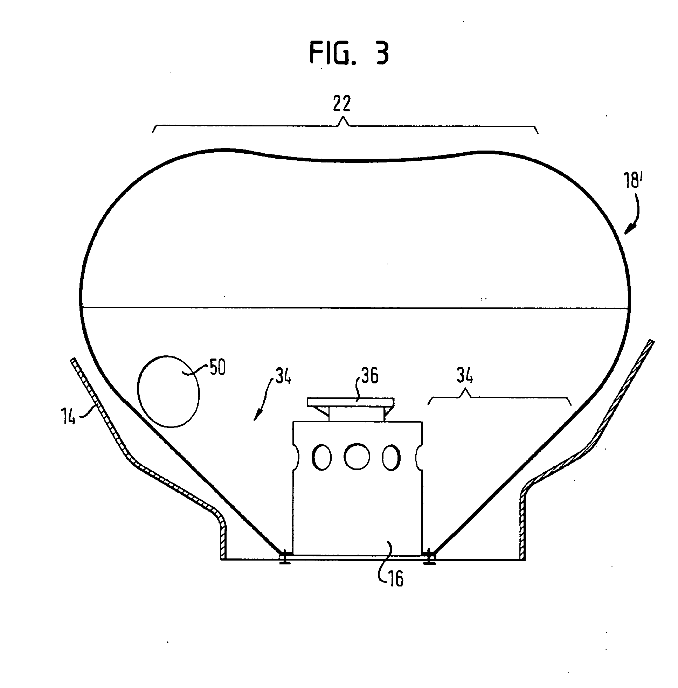

Bei der Ausführungsform nach Figur 3 werden alle im Zusammenhang mit Figur 2 bereits eingeführten Bezugszeichen für Teile gleicher Funktion erneut verwendet. Im Gegensatz zu der Ausführungsform nach Figur 2 hat der Gassack 18' nach Figur 3 keine ringförmige Gestalt. Der Gassack weist vielmehr eine Ausströmöffnung 50 auf, die im gefalteten Zustand unterhalb des Bildschirms 36 liegt. Beim Entfalten gleitet der Rand der Ausströmöffnung 50 nach oben, am Bildschirm 36 entlang, so daß schließlich der Bildschirm 36 im Inneren des Gassacks 18' liegt. Auch bei dieser Ausführungsform bleibt die Anzeige 46 bei Lenkeinschlag immer horizontal aufgrund der Steuerung 42, obowohl sich der Bildschirm 36 dreht.

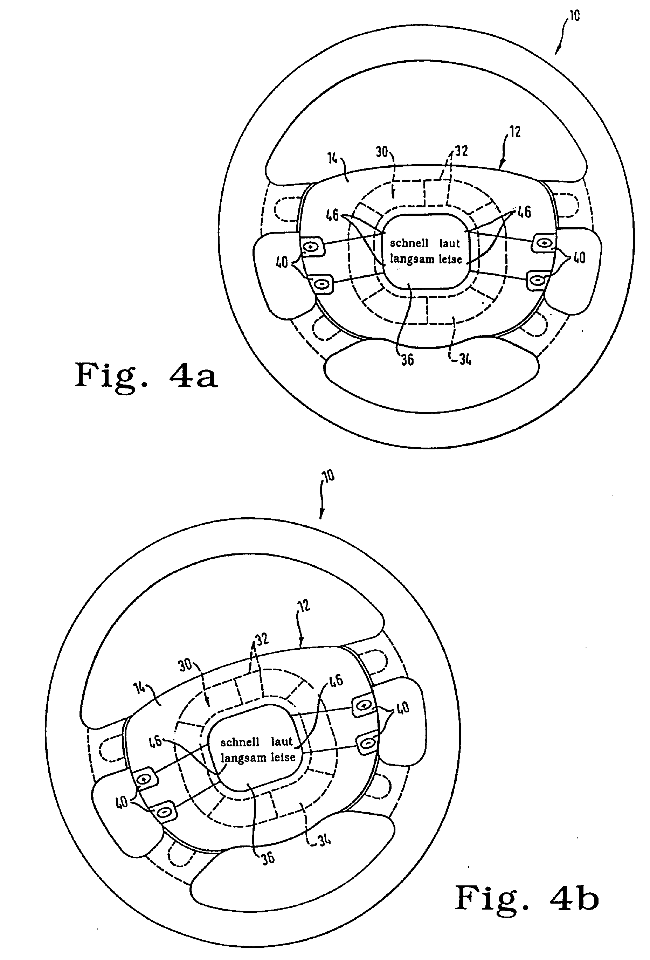

Bei der Ausführungsform nach den Figuren 4a, 4b sind links und rechts der Anzeigevorrichtung jeweils ein Paar von Multifunktionsschaltern 40 am Rand der Abdeckkappe 14 angeordnet. Wie bei der Ausführungsform nach Figur 2 ist die Anzeigevorrichtung mit der Steuerung 42 gekoppelt, was auch für die Multifunktionsschalter 40 gilt. Die Steuerung 42 sendet Signale zur Anzeigevorrichtung, die zu jedem Multifunktionsschalter 40 separat zugeordnet eine Anzeige 46 liefert und zwar derart, daß die Anzeige angibt, welche Funktionen durch Drücken des entsprechenden Multifunktionsschalters 40 ausgelöst wird. So ist beispielsweise die linke obere Anzeige 46 dem linken oberen Multifunktionsschalter zugeordnet, durch den ein Tempomat gesteuert wird. Einem Fahrer, der die Funktionen der Multifunktionsschalter nicht ausreichend kennt, wird über die Anzeige auf einfache Weise eine Information, die auch durch Piktogramme oder dergleichen erfolgen kann, gegeben, wie die Multifunktionsschalter zu bedienen sind. Die beiden rechten Multifunktionsschalter 40 befinden sich im gezeigten Zustand in einer Einstellung, bei der die Lautstärke des Radios oder Telefons verändert werden kann. Es ist auch möglich, daß menügesteuert durch Drücken der Multifunktionsschalter in andere Ebenen gesprungen werden kann, was immer eine komplizierte Bedienung erfordert. Bislang war es notwendig, daß der Fahrer alle Ebenen auswendig kannte, um nicht auf ein ständiges Probieren nach dem Zufallsprinzip angewiesen zu sein. Durch die Erfindung werden dem Fahrer die zahlreichen Funktionen eines einzelnen Schalters ohne weiteres ersichtlich. Auch hier bleibt die Anzeige in Form der Buchstaben oder Symbole horizontal ausgerichtet, selbst wenn sich der Bildschirm dreht (siehe Figur 4b).

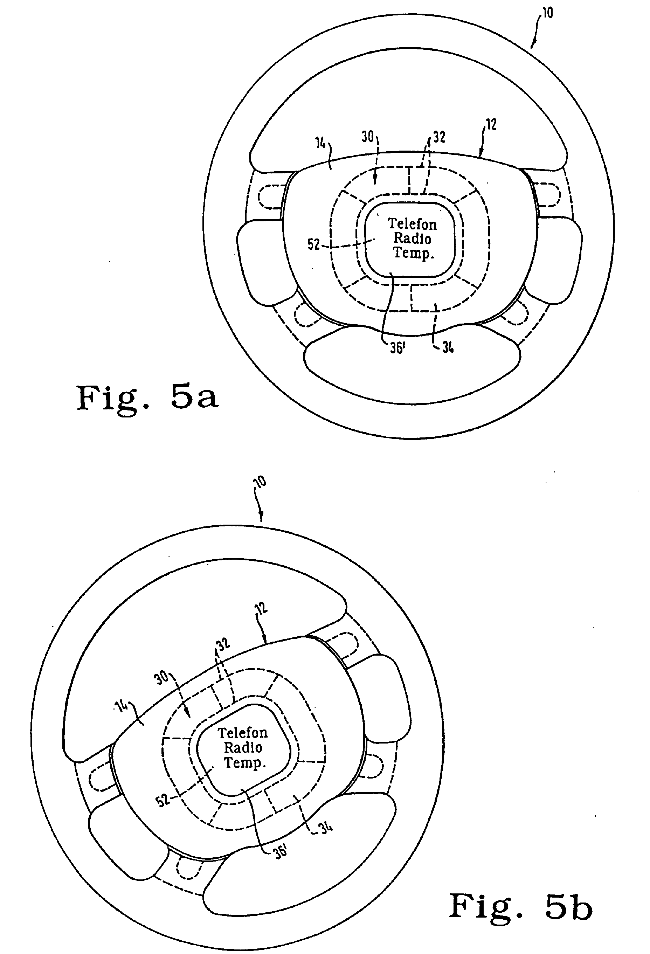

Bei der Ausführungsform nach den Figuren 5a, 5b ist zentrisch in der Abdeckkappe 14 ein Touch-Screen 36' angeordnet, der eine kombinierte Anzeige- und Bedienvorrichtung darstellt. Es sind mehrere Felder 52 mit Anzeigen vorgesehen, die bei Berührung anwählbar sind, so daß ein Menü geöffnet wird. Beispielsweise kann über das Feld "Telefon" der gesamte Bildschirm zur Darstellung des Telefonbuches verwendet werden, so daß sehr schnell auf einzelne Einträge zugegriffen werden kann. Über das Feld "Radio" lassen sich Funktionen wie Lautstärke oder gewählte Frequenz verändern. Auch bei Figur 5b bleibt die Anzeige in Form der Buchstaben oder Symbole horizontal ausgerichtet, selbst wenn sich der Bildschirm dreht.

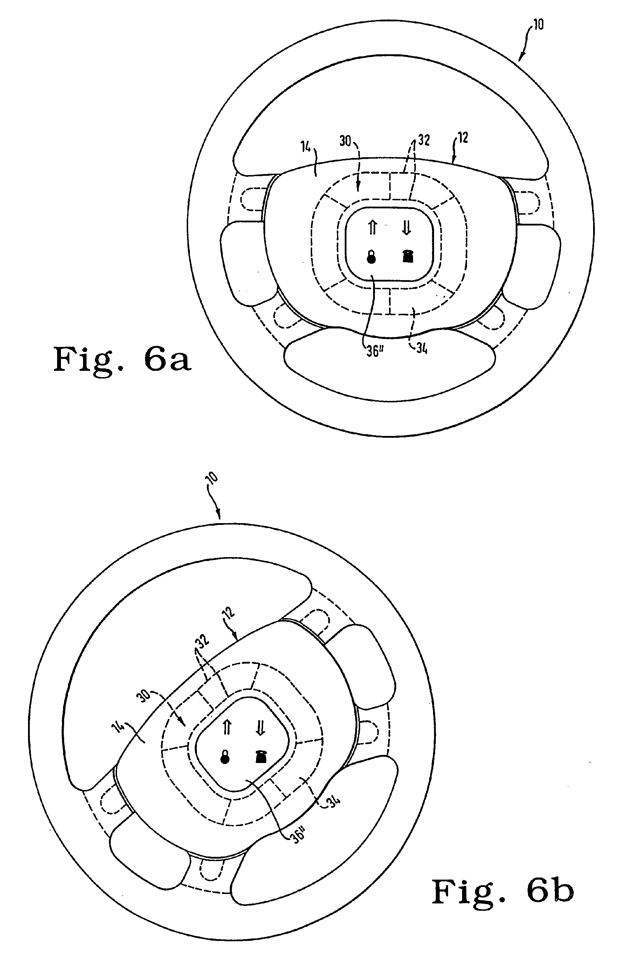

Bei der Ausführungsform nach den Figuren 6a, 6b ist im Zentrum der Abdeckkappe 14 ein reines Bedienelement 36" in Form eines Touch Pads angeordnet. Über dieses Bedienfeld kann der Fahrer beispielsweise im Stillstand des Fahrzeugs einen Zeiger auf einem anderweitig angeordneten Bildschirm schnell bewegen und durch Drücken des Touch Pads Funktionen wählen. Beispielsweise könnte auf die Windschutzscheibe eine Anzeige projiziert werden, die über den Touch Pad verändert werden kann, indem Funktionen oder Menüs angewählt werden.

Auch eine Kombination von Bedienelementen und Anzeigevorrichtungen im Zentrum der Abdeckkappe 14 ist möglich.

Gemäß der bevorzugten Ausführungsformen ist die Austrittsöffnung 34 immer in einer geschlossenen Ringform ausgebildet. Jedoch ist auch eine offene Ringform möglich, z.B. eine Austrittsöffnung 34 in Form eines "U".

## Patentansprüche

1. Fahrzeuglenkvorrichtung, mit
einem Lenkrad (10), das ein Gassackmodul (12) mit einem Gassack (18, 18') und einer frontseitigen Abdeckkappe (14) aufweist, die eine Austrittsöffnung (34) für den Gassack (18, 18') bis zu dessen Entfaltung verschließt,
**dadurch gekennzeichnet, daß** in der Abdeckkappe (14) eine Anzeige- und/oder Bedienvorrichtung angeordnet ist und die Austrittsöffnung (34) um die Anzeige- und/oder Bedienvorrichtung (36) herum verläuft.

2. Fahrzeuglenkvorrichtung nach Anspruch 1, **dadurch gekennzeichnet, daß** die Austrittsöffnung (34) eine geschlossene Ringform hat.

3. Fahrzeuglenkvorrichtung nach Anspruch 2, **dadurch gekennzeichnet, daß** der Gassack (28) ringförmig ausgebildet ist und sich über die Austrittsöffnung (34) nach außen bewegen kann.

4. Fahrzeuglenkvorrichtung nach einem der vorhergehenden Ansprüche, **dadurch gekennzeichnet, daß** die Anzeige- und/oder Bedienvorrichtung (36) beim Entfalten des Gassacks (18, 18') stationär am Lenkrad (10) befestigt bleibt.

5. Fahrzeuglenkvorrichtung nach einem der vorhergehenden Ansprüche, **dadurch gekennzeichnet, daß** der Gassack (18) eine Frontwand (22), auf die ein Insasse prallen kann, aufweist, die eine zentrische, bis zur Anzeige- und/oder Bedienvorrichtung (26) verlaufende Einbuchtung (24) hat.

6. Fahrzeuglenkvorrichtung nach einem der vorhergehenden Ansprüche, **dadurch gekennzeichnet, daß** die Anzeigevorrichtung ein Bildschirm (36) zur Anzeige verschiedener Daten, insbesondere Fahrzeugdaten, ist.

7. Fahrzeuglenkvorrichtung nach Anspruch 6, **dadurch gekennzeichnet, daß** der Bildschirm (36) für wenigstens eine der folgenden Informationswiedergaben ausgebildet ist:
- Geschwindigkeitsanzeige,
- Navigationsanzeige,
- PC-Anzeige,
- Radioanzeige und
- Telefonanzeige.

8. Fahrzeuglenkvorrichtung nach einem der vorhergehenden Ansprüche, **gekennzeichnet durch** eine in der Abdeckkappe vorgesehene Anzeigevorrichtung und **durch** einen Lenkwinkel-Erfassungssensor (44), der über eine Steuerung (42) mit der Anzeigevorrichtung gekoppelt ist, wobei unabhängig vom Lenkwinkeleinschlag die Anzeigevorrichtung immer eine horizontal ausgerichtete Anzeige (46) liefert.

9. Fahrzeuglenkvorrichtung nach einem der vorhergehenden Ansprüche, **dadurch gekennzeichnet, daß** an der Abdeckkappe eine Anzeigevorrichtung und an der Lenkvorrichtung Multifunktionsschalter (40) vorgesehen sind, die mit der Anzeigevorrichtung über eine Steuerung (42) gekoppelt sind, wobei die Anzeigevorrichtung eine Anzeige (46) liefert, welche die Funktion der Multifunktionsschalter angibt.

10. Fahrzeuglenkvorrichtung nach einem der vorhergehenden Ansprüche, **dadurch gekennzeichnet, daß** die Anzeige- und/oder Bedienvorrichtung ein zur Bedienung wenigstens einer Einrichtung ausgebildeter Touch-Screen ist.

11. Fahrzeuglenkvorrichtung nach einem der vorhergehenden Ansprüche, **dadurch gekennzeichnet, daß** in der Abdeckkappe eine Bedienvorrichtung in Form eines Touch Pads vorgesehen ist.
